# EUROPÄISCHE PATENTSCHRIFT

(11) **EP 1 348 725 B1**
(45) Veröffentlichungstag und Bekanntmachung des Hinweises auf die Patenterteilung: **17.06.2009**
(21) Anmeldenummer: 03006041.2
(22) Anmeldetag: 19.03.2003
(51) Int. Cl.: C08F 220/58

(54) **Stabile Dispersionskonzentrate**
Stable dispersion concentrate
Dispersion concentrée stable

(30) Priorität: 27.03.2002 DE 10213623
(43) Veröffentlichungstag der Anmeldung: 01.10.2003
(73) Patentinhaber: Clariant Produkte (Deutschland) GmbH, 65929 Frankfurt am Main (DE)
(72) Erfinder: Loeffler, Matthias Dr., 65527 Niedernhausen (DE); Morschhäuser, Roman Dr., 55122 Mainz (DE); Da Rocha, Livio Caribé, CEP 04609-003, Sao Paulo-SP (BR)

(56) Entgegenhaltungen:
- DE-A- 19 625 810

## Beschreibung

Die vorliegende Erfindung betrifft Dispersionskonzentrate, enthaltend Polymere auf Basis von Acryloyldimethyltaurinsäure bzw. deren Salze (AMPS).

Diese in EP 816 403 beschriebenen Polymeren auf Basis von Acryloyldimethyltaurinsäure bzw. deren Salze, bevorzugt hergestellt durch Fällungspolymerisation, decken breite anwendungstechnische Eigenschaften ab und können als Verdicker, Konsistenzgeber, Emulgator, Dispergator, Gleitmittel, Conditioner und/oder Stabilisator in kosmetischen, dermatologischen und pharmazeutischen Mitteln eingesetzt werden.

Die bevorzugt durch Fällungspolymerisation hergestellten Polymere auf Basis von AMPS entsprechend dem Stand der Technik sind pulverförmige Substanzen mit dadurch resultierenden anwendungstechnischen Nachteilen. Neben einer Staubexplosionsgefahr kann der Staub Gefahren bei Inhalation bergen, ferner ist die Lagerstabilität der Pulver durch Hygroskopie beeinträchtigt.

Bei Verarbeitung bzw. Verwendung der pulverförmigen Produkte ist der Lösevorgang (bevorzugt werden die Polymere in wässrige Medien eingearbeitet) meistens sehr zeitaufwendig. Der Lösevorgang der pulverförmigen Produkte kann, je nach Ansatzgröße eine Stunde und mehr betragen. Zudem wird häufig eine unvollständige Lösung/Aufquellung der pulverförmigen Produkte beobachtet, was zu einer Qualitäts- und Stabilitätsverminderung der Endformulierung führt (Klumpenund Quaddelbildung). Des weiteren sind bei der Verarbeitung bzw. Verwendung der pulverförmigen Produkte i.a. besondere Rühr- und Dispergiervorrichtungen erforderlich, um die AMPS-Polymere in den Mitteln zu lösen, bzw. zu suspendieren.

Zielsetzung war, flüssige Formen der in den o.g. Anmeldeschriften beschriebenen pulverförmigen Polymere auf Basis von Acryloyldimethyltaurinsäure bzw. deren Salze, bevorzugt hergestellt durch Fällungspolymerisation (AMPS) zu finden. Bevorzugt sind dabei Dispersionen der Polymere in einer flüssigen Matrix enthaltend Öl, Emulgator, Dispergator und/oder Wasser. Bevorzugt sind dabei flüssig-disperse Formen mit möglichst hohem Polymeranteil, niedriger Viskosität bei gleichzeitig hoher Stabilität der Dispersion. Die verwendeten Öl- und
Emulgator/Dispergatoranteile sind bevorzugt in kosmetische und pharmazeutisch akzeptable Rohstoffe.

Überraschenderweise wurde gefunden, dass sich AMPS-Polymere hervorragend eignen zur Herstellung von Dispersionskonzentraten.

Gegenstand der Erfindung sind stabile Dispersionskonzentrate, enthaltend
I) 5 bis 80 Gew.-%, bevorzugt 10 bis 80 Gew.-%, besonders bevorzugt 20 bis 60 Gew.-%, insbesondere bevorzugt 30 bis 40 Gew.-% eines Polymers, das in statistischer Verteilung aus 90 bis 99,99 Gew.-% aus Monomeren der allgemeinen Formel (1)

   H₂C=CHCONHC(CH₃)₂CH₂SO₃X (1)

   und 0,01 bis 10 Gew.-% an vernetzenden Strukturen, die aus Monomeren mit mindestens zwei olefinischen Doppelbindungen hervorgegangen sind, besteht, wobei X für ein Kation oder ein Gemisch von Kationen steht und X nicht zu mehr als 10 Mol-% aus Protonen bestehen darf,
II) 20 bis 95 Gew.-%, bevorzugt 20 bis 90 Gew.-%, besonders bevorzugt 40 bis 80 Gew.-%, insbesondere bevorzugt 60 bis 70 Gew.-% eines oder mehrerer Emulgatoren und/oder einer Ölphase und
III) 0 bis 30 Gew.-%, bevorzugt 0 bis 10 Gew.-%, besonders bevorzugt 0 bis 5 Gew.-% Wasser.

Bevorzugt enthalten die erfindungsgemäßen Dispersionskonzentrate Polymere enthaltend 98 bis 99,5 Gew.-% an Resten der allgemeinen Formel (1) und 0,5 bis 2 Gew.-% an vernetzenden Strukturen, die aus Monomeren mit mindestens zwei olefinischen Doppelbindungen hervorgegangen sind.

Das Symbol X in der Formel 1 steht insbesondere für ein Proton, ein Kation eines Alkalimetalls, ein Äquivalent eines Kations eines Erdalkalimetalls oder für ein Ammoniumion.

Besonders bevorzugte Polymere sind dadurch gekennzeichnet, dass 90 bis 100 Mol-% der Kationen X aus Ammoniumionen und 0 bis 10 Mol-% aus Protonen bestehen.

Vernetzbare Strukturen, die aus Monomeren mit mindestens zwei olefinischen Doppelbindungen hervorgegangen sind, leiten sich bevorzugt ab von beispielsweise Dipropylenglykol-diallylether, Polyglykoldiallylether, Triethylenglykoldivinylether, Hydrochinon-diallylether, Tetraallyloxyethan oder andere Allyl- oder Vinylether multifunktioneller Alkohole, Tetraethylenglykoldiacrylat, Triallylamin, Trimethylolpropan-diallylether, Methylen-bis-acrylamid, Divinylbenzol oder Trimethylolpropyl-tri(meth)acrylat.

Die erfindungsgemäß in Dispersionskonzentraten eingesetzten Polymere können durch radikalische Polymerisation von 90 - 99,99 Gew.-% der Verbindung der allgemeinen Formel (1) und 0,01 - 10 Gew.-% eines oder mehrerer Vernetzer, die mindestens zwei olefinische Doppelbindungen enthalten, hergestellt werden.

Bevorzugt werden diese Polymere hergestellt
a) durch Lösen oder Dispergieren der Verbindung der allgemeinen Formel (1) in einem Lösungsmittel oder Lösungsmittelgemisch, wobei X in diesem Fall auch bis zu 100 Mol-% aus Protonen bestehen kann;
b) gegebenenfalls neutralisieren der erhaltenen Lösung oder Dispersion mittels einer oder mehrerer Basen, so dass mindestens 90 Mol-% der Sulfonsäure in die Salzform überführt werden,
c) Zugabe eines oder mehrerer Vernetzer mit mindestens zwei olefinischen Doppelbindungen zu der gemäß a) und b) erhaltenen Lösung oder Dispersion und
d) Starten der Polymerisation in an sich bekannter Weise durch radikalbildende Verbindungen bei einer Temperatur von 10 bis 150°C, wobei die Wahl des in a) erwähnten Lösungsmittels oder Lösungsmittelgemisches so erfolgt, dass die erhaltenen Polymerisate weitgehend im Lösungsmittel oder Lösungsmittelgemisch unlöslich sind.

Im einzelnen können die beschriebenen Polymere durch Fällungspolymerisation wie folgt hergestellt werden. Als Reaktionsmedium dient vorzugsweise ein wasserlöslicher Alkohol oder ein Gemisch mehrerer wasserlöslicher Alkohole mit einem bis vier C-Atomen, vorzugsweise in tert.-Butanol, wobei der Wassergehalt des Alkohols oder Alkoholgemisches 10 Gew.-% nicht überschreiten darf. Die Wahl der Art und Menge des Lösungsmittels hat so zu erfolgen, dass die eingesetzte Menge an 2-Acrylamido-2-methylpropansulfonsäure und/oder das zu polymerisierende Salz weitgehend löslich oder dispergierbar ist. Unter weitgehend löslich oder dispergierbar ist zu verstehen, dass sich auch nach Abstreifen des Rührwerks kein festes Material aus der Lösung oder Dispersion absetzt. Das im Verlaufe der Reaktion entstehende Polymerisat hingegen soll in dem gewählten Lösungsmittel (oder -gemisch) jedoch weitgehend unlöslich sein. Unter weitgehend unlöslich oder dispergierbar ist zu verstehen, dass sich auch nach Abstellen des Rührwerkes kein festes Material aus der Lösung oder Dispersion absetzt. Das im Verlaufe der Reaktion entstehende Polymerisat hingegen soll in dem gewählten Lösungsmittel (oder -gemisch) jedoch weitgehend unlöslich sein. Unter weitgehend unlöslich ist hierbei zu verstehen, dass im Verlauf der Polymerisation eine gut rührbare breiige Polymermasse entsteht, in der sich keine Klumpen oder Verklebungen bilden dürfen. Das durch Absaugen der Paste erhältliche Filtrat darf einen Feststoffgehalt von max. 5 Gew.-% aufweisen. Sind die Polymerisate in stärkerem Ausmaß im gewählten Lösungsmittel oder Lösungsmittelgemisch löslich, kann es beim Trocknen der Polymerisatpaste zu Verklumpungen kommen.

Die Polymerisationsreaktion selbst wird in an sich bekannter Weise durch radikalbildende Verbindungen wie Azoinitiatoren (z.B. Azo-bis-isobutyronitril), Peroxiden (z.B. Dilaurylperoxid) oder Persulfaten in einem geeigneten Temperaturintervall von 20 bis 120°C, vorzugsweise zwischen 40 und 80°C, ausgelöst und über einen Zeitraum von 30 min bis mehreren Stunden fortgeführt.

Die erfindungsgemäßen Dispersionskonzentrate enthalten neben dem Copolymer noch einen oder mehrere Emulgatoren und/oder eine Ölphase in der angegebenen Menge. Bei Verwendung von Emulgatoren als alleiniger Komponente II ist der Anteil der Ölphase somit 0 % und entsprechend ist der Anteil der Emulgatoren 0 %, wenn die Komponente II nur aus einer Ölphase besteht. Bevorzugt verwendet man als zweite Komponente eine Mischung aus Emulgator und Ölphase.

Als Emulgatoren kommen in Betracht Anlagerungsprodukte von 0 bis 30 Mol Alkylenoxid, insbesondere Ethylen-, Propylen-, Butylenoxid an lineare Fettalkohole mit 8 bis 22 C-Atomen, an Fettsäuren mit 12 bis 22 C-Atomen, an Alkylphenole mit 8 bis 15 C-Atomen in der Alkylgruppe und an Sorbitanester; (C₁₂-C₁₈)-Fettsäuremonound -diester von Anlagerungsprodukten von 0 bis 30 Mol Ethylenoxid an Glycerin; Glycerinmono- und -diester und Sorbitanmono- und -diester von gesättigten und ungesättigten Fettsäuren mit 6 bis 22 Kohlenstoffatomen und ggfs. deren Ethylenoxidanlagerungsprodukten; Anlagerungsprodukte von 15 bis 60 Mol Ethylenoxid an Rizinusöl und/oder gehärtetes Rizinusöl; Polyol- und insbesondere Polyglycerinester, wie z.B. Polyglycerinpolyricinoleat und Polyglycerinpoly-12-hydroxystearat. Bevorzugt sind flüssige Fettsäureester, die sowohl ethoxyliert (PEG-10 Polyglyceryl-2 Laurate) als auch nicht ethoxyliert (Polyglyceryl-2 Sesquiisostearate) sein können.

Weitere erfindungsgemäße Dispersionskonzentrate enthalten bevorzugt Sorbitolester, hergestellt durch Reaktion von Sorbitol mit Fettsäuremethylestern oder Fettsäuretriglyceriden. Der Fettsäurerest in den Fettsäuremethylestern und Fettsäuretriglyceriden enthält im allgemeinen 8 bis 22 C-Atome und kann geradkettig oder verzweigt, gesättigt oder ungesättigt sein. Beispiele hierfür sind Palmitinsäure, Stearinsäure, Laurinsäure, Linolsäure, Linolensäure, Isostearinsäure oder Ölsäure. Als Fettsäuretriglyceride kommen alle nativen tierischen oder pflanzlichen Öle, Fette und Wachse in Frage, beispielsweise Olivenöl, Rapsöl, Palmkernöl, Sonnenblumenöl, Kokosöl, Leinöl, Ricinusöl, Sojabohnenöl, gegebenenfalls auch in raffinierter oder hydrierter Form. Da diese natürlichen Fette, Öle und Wachse normalerweise Mischungen von Fettsäuren mit unterschiedlicher Kettenlänge darstellen, gilt dies auch für die Fettsäurereste in den erfindungsgemäß eingesetzten Sorbitolestern. Die erfindungsgemäß eingesetzten Sorbitolester können auch alkoxyliert sein, vorzugsweise ethoxyliert.

Des weiteren können anionische Emulgatoren, wie ethoxylierte und nicht ethoxylierte mono-, di- oder tri-Phosphorsäureester, aber auch kationische Emulgatoren wie mono-, di- und tri-Alkylquats und deren polymere Derivate eingesetzt werden.

Ebenfalls geeignet sind Gemische von Verbindungen aus mehreren dieser Substanzklassen.

Die erfindungsgemäßen Dispersionen können neben AMPS-Copolymer ein oder mehrere Öle enthalten, bevorzugt aus der Gruppe der Kohlenwasserstoffe, Esteröle, pflanzlichen Öle und Silikonöle.

Die erfindungsgemäß eingesetzten Öle umfassen Kohlenwasserstofföle mit linearen oder verzweigten, gesättigten oder ungesättigten C₇-C₄₀-Kohlenstoffketten, beispielsweise Vaseline, Dodecan, Isododecan, Cholesterol, Lanolin, hydrierte Polyisobutylene, Docosane, Hexadecan, Isohexadecan, Paraffine und Isoparaffine;

Öle pflanzlichen Ursprungs, insbesondere flüssige Triglyceride wie Sonnenblumen-, Mais-, Soja-, Reis-, Jojoba-, Babusscu-, Kürbis-, Traubenkern-, Sesam-, Walnuss-, Aprikosen-, Makadamia-, Avocado-, Süßmandel-, Wiesenschaumkraut-, Ricinusöl, Olivenöl, Erdnussöl, Rapsöl und Kokosnussöl;

Öle tierischen Ursprungs, beispielweise Rindertalg, Perhydrosqualen, Lanolin; synthetische Öle wie Purcellinöl, lineare und/oder verzweigte Fettalkohole und Fettsäureester, bevorzugt Guerbetalkohole mit 6 bis 18, vorzugsweise 8 bis 10, Kohlenstoffatomen; Ester von linearen (C₆-C₁₃)-Fettsäuren mit linearen (C₆-C₂₀)-Fettalkoholen; Ester von verzweigten (C₆-C₁₃)-Carbonsäuren mit linearen (C₆-C₂₀)-Fettalkoholen, Ester von linearen (C₆-C₁₈)-Fettsäuren mit verzweigten Alkoholen, insbesondere 2-Ethylhexanol; Ester von linearen und/oder verzweigten Fettsäuren mit mehrwertigen Alkoholen (wie z.B. Dimerdiol oder Trimerdiol) und/oder Guerbetalkoholen; Alkoholester von C₁-C₁₀-Carbonsäuren oder C₂-C₃₀-Dicarbonsäuren, C₁-C₃₀-Carbonsäuremonoester und Polyester von Zucker, C₁-C₃₀-Monoester und Polyester von Glycerin;
Wachse wie Bienenwachs, Paraffinwachs oder Mikrowachse, gegebenenfalls in Kombination mit hydrophilen Wachsen, wie z.B. Cetylstearylalkohol; Fluorierte und perfluorierte Öle;
Monoglyceride von C₁-C₃₀-Carbonsäuren, Diglyceride von C₁-C₃₀-Carbonsäuren, Triglyceride von C₁-C₃₀-Carbonsäuren, beispielsweise Triglyceride der Capryl/Caprinsäuren, Ethylenglykolmonoester von C₁-C₃₀-Carbonsäuren, Ethylenglycoldiester von C₁-C₃₀-Carbonsäuren, Propylenglycolmonoester von C₁-C₃₀-Carbonsäuren, Propylenglycoldiester von C₁-C₃₀-Carbonsäuren, sowie poropoxilierte und ethoxilierte Derivate der oben genannten Verbindungsklassen.

An Silikonölen in Betracht kommen Dimethylpolysiloxane , Cyclomethicone, Polydialkylsiloxane R₃SiO(R₂SiO)xSiR₃, wobei R für eine Methyl und Ethyl, besonders bevorzugt für Methyl steht und x für eine Zahl von 2 bis 500 steht, beispielsweise unter den Handelsnamen VICASIL (General Electric Company), DOW CORNING 200, DOW CORNING 225, DOW CORNING 200 (Dow Corning Corporation), erhältlichen Dimethicone. Trimethylsiloxysilicate [(CH₂)₃SiO)1/2]x[SiO₂]y, wobei x für eine Zahl von 1 bis 500 und y für eine Zahl von 1 bis 500 steht. Dimethiconole R₃SiO[R₂SiO]xSiR₂OH und HOR₂SiO[R₂SiO]xSiR₂OH, wobei R für Methyl oder Ethyl und x für eine Zahl bis zu 500 steht, Polyalkylarylsiloxane, beispielsweise unter den Handelsbezeichnungen SF 1075 METHYLPHENYL FLUID (General Electric Company) und 556 COSMETIC GRADE PHENYL TRIMETHICONE FLUID (Dow Corning Corporation) erhältliche Polymethylphenylsiloxane, Polydiarylsiloxane, Silikonharze, cyclische Silikone und amino-, fettsäure-, alkohol-, polyether-, epoxy-, fluor- und/oder alkylmodifizierte Silikonverbindungen, sowie Polyethersiloxan-Copolymere, wie in US 5104 645 und den darin zitierten Schriften beschrieben, die bei Raumtemperatur sowohl flüssig als auch harzförmig vorliegen können.

Die Herstellung der erfindungsgemäßen Dispersionskonzentrate kann auf verschiedene Weise erfolgen, wobei eine inverse Emulsionspolymerisation oder eine inverse Mini-Emulsionspolymerisation genauso bevorzugt ist wie eine physikalische Abmischung von AMPS-Polymer mit Öl-/Emulgator- und ggfs. Wasserphase. Die physikalische Abmischung erfolgt in der Weise, dass Ölphase und Emulgator/en bei 10 bis 60°C, bevorzugt bei Raumtemperatur vermischt werden, zu ca. 40 Gew.-% der Öl-/Emulgatorphase AMPS-Copolymer/e in einem Zeitraum von 10 bis 60 Min, bevorzugt ca. 30 Min. unter kräftigem Rühren zugegeben wird. Dabei bildet sich eine homogene Paste. Wenn erforderlich, kann eine geringe Menge an Wasser zum besseren Verarbeiten hinzugefügt werden. Anschließend wird die restliche Öl-/ Emulgatorphase unter Rühren zugegeben und mehrere Stunden homogen verrührt. Es resultiert eine flüssige, gießfähige Dispersion.

Die erfindungsgemäßen Dispersionskonzentrate eignen sich als Verdicker, Konsistenzgeber, Emulgator, Solubilisator, Dispergator, Gleitmittel, Haftmittel, Conditioner und/oder Stabilisator - hervorragend zur Formulierung von kosmetischen, pharmazeutischen und dermatologischen Mitteln, insbesondere von Öl-in-Wasser Emulsionen in Form von Cremes, Lotionen, Reinigungsmilch, Cremegele, Sprühemulsionen, z.B. Bodylotions, After-Sun Lotions, Sonnenschutzmittel und Deo-Sprays,

Die erfindungsgemäßen Dispersionskonzentrate werden in den kosmetischen und pharmazeutischen Zubereitungen in Gewichtsmengen eingesetzt, dass Polymerkonzentrationen von 0,01 bis 10 Gew.-%, bevorzugt 0,1 bis 5 Gew.-%, besonders bevorzugt 0,5 bis 3 Gew.-%, bezogen auf die fertigen Mittel resultieren.

Die erfindungsgemäßen Mittel können anionische, kationische, nichtionische, zwitter-ionische und/oder amphotere Tenside, sowie weitere Hilfs- und Zusatzstoffe, kationische Polymere, Filmbildner, Überfettungsmittel, Stabilisatoren, biogene Wirkstoffe, Glycerin, Konservierungsmittel, Perlglanzmittel, Farb- und Duftstoffe, Lösungsmittel, Trübungsmittel, ferner Eiweißderivate wie Gelatine, Collagenhydrolysate, Polypeptide auf natürlicher und synthetischer Basis, Eigelb, Lecithin, Lanolin und Lanolinderivate, Fettalkohole, Silicone, deodorierende Mittel, Stoffe mit keratolytischer und keratoplastischer Wirkung, Enzyme und Trägersubstanzen enthalten. Des weiteren können den erfindungsgemäßen Mitteln antimikrobiell wirkende Agentien zugesetzt werden.

Zusätzlich können die erfindungsgemäßen Mittel organische Lösungsmittel enthalten. Prinzipiell kommen als organische Lösungsmittel alle ein- oder mehrwertigen Alkohole in Betracht. Bevorzugt werden Alkohole mit 1 bis 4 Kohlenstoffatomen wie Ethanol, Propanol, Isopropanol, n-Butanol, i-Butanol, t-Butanol, Glycerin und Mischungen aus den genannten Alkoholen eingesetzt. Weitere bevorzugte Alkohole sind Polyethylenglykole mit einer relativen Molekülmasse unter 2000. Insbesondere ist ein Einsatz von Polyethylenglykol mit einer relativen Molekülmasse zwischen 200 und 600 und in Mengen bis zu 45 Gew.-% und von Polyethylenglykol mit einer relativen Molekülmasse zwischen 400 und 600 in Mengen von 5 bis 25 Gew.-% bevorzugt. Weitere geeignete Lösungsmittel sind beispielsweise Triacetin (Glycerintriacetat) und 1-Methoxy-2-propanol. Hydrotrop wirken kurzkettige Aniontenside, insbesondere Arylsulfonate, beispielsweise Cumol- oder Toluolsulfonat.

Die nachfolgenden Beispiele von Dispersionskonzentraten mit AMPS Polymeren sollen den Gegenstand der Erfindung näher erläutern, ohne ihn darauf einzuschränken (bei den Prozentangaben handelt es sich um Gew.-%).

Es wurden verschiedene Basisrezepturen mit unterschiedlichen Emulgator- und Ölkonzentrationen hergestellt. Die resultierenden Polymerdispersionen wurden nach Aussehen, Viskosität sowie Stabilität (Sedimentierung bei Lagerung 25°C 3 Wochen) beurteilt. Tabelle 1 zeigt Beispiele von Dispersionskonzentraten, die fließfähig und lagerstabil sind.

**Tabelle 1**

| Produkt Name | A | B | C | D |
|---|---|---|---|---|
| Hostacerin AMPS | 32 | 36 | 40 | 30 |
| Hostacerin DGI | | 30 | 3 | 51 |
| Hostaphat KL 340 D | 18 | 18 | 2 | 13 |
| Emulsogen SRO | 30 | | | |
| Mineral Öl, niedrig viskos | 10 | | 27,5 | 6 |
| Isopropyl Palmitate | 10 | | 27,5 | |
| Myritol 318 | | 16 | | |

| | | | | |
|---|---|---|---|---|
| Die Zahlen bedeuten Gew.-%. A Öl- und/oder Emulgatorkomponente 3-8 mischen und ein Drittel der Lösung vorlegen. B In einer halben Stunde Polymer 1-2 unter Rühren bei 400 upm zugeben. C Eine halbe Stunde nachrühren dann die restliche Lösung von A zugeben. D Weitere 5 Stunden nachrühren. | | | | |

**Tabelle 2**

| | |
|---|---|
| Hostacerin AMPS | Ammonium Polyacryloyldimethyl Taurate |
| Hostacerin DGI | Polyglyceryl-2-Sesquiisostearate |
| Hostaphat KL 340 D | Trilaureth-4 Phosphate |
| Emulsogen SRO | Rapeseed Oil Sorbitol Esters |
| Myritol 318 | Caprylic/Capric Triglyceride |

Beispiele für kosmetische Präparate auf der Basis der erfindungsgemäßen Dispersionskonzentrate.

### Beispiel 1: Feuchtigkeitsspendende Lotion

| | | |
|---|---|---|
| A | Almondöl | 7,00 % |
| | Cyclomethicone | 5,00 % |
| B | Dispersionskonzentrat A | 4,00 % |
| C | Glycerin | 7,00 % |
| | Wasser | ad 100 % |
| | Konservierungsmittel | q.s. |
| D | Duftstoff | 0,30 % |

### Herstellung

| | |
|---|---|
| I | A und B mischen. |
| II | Lösung von C in I einrühren. |
| III | D zu II geben. |
| IV | homogenisieren |
| V | pH 5,5 |

### Beispiel 2: Sonnenschutzlotion

| | | |
|---|---|---|
| A | Vaselin | 5,00% |
| | Paraffinöl | 10,00% |
| | Dispersionskonzentrat B | 2,00 % |
| | Tocopherylacetat | 1,00 % |
| | Octylmethoxycinnamat | 2,00 % |
| | Parsol 1789 | 0,20 % |
| B | Ethanol | 10,00 % |
| C | Butylenglykol | 5,00 % |
| | Wasser | ad 100 % |

### Herstellung

| | |
|---|---|
| I | A und C werden getrennt auf 75°C erwärmt, danach vereinigt und unter Rühren auf 65°C abgekühlt, homogenisiert und weiter auf 35°C abgekühlt, |
| II | B in I eingerühren, homogenisieren und auf Raumtemperatur abkühlen |

### Beispiel 3: O/W - Hautmilch

### Zusammensetzung

| | | |
|---|---|---|
| A | Isopropylpalmitat | 4,00 % |
| | Mandelöl 5,00 % | 4,00 % |
| | Weizenkeimöl | 1,00 % |
| | Cetearylisononanoat | 8,00 % |
| | ®Cetiol SN (Henkel) | |
| B | Dispersionskonzentrat C | 1,50 % |
| C | Wasser | ad 100 % |
| D | Duftstoffe | 0,30 % |

### Herstellung

| | |
|---|---|
| I | B unter Rühren zu A hinzugeben |
| II | C und D zu I hinzurühren |
| III | Emulsion homogenisieren |

## Patentansprüche

1. Stabile Dispersionskonzentrate, enthaltend:
I) 5 bis 80 Gew.-% eines Polymers, das in statistischer Verteilung aus 90 bis 99,99 Gew.-% aus Monomeren der allgemeinen Formel (1)
H₂C=CHCONHC(CH₃)₂CH₂SO₃X (1)
und 0,01 bis 10 Gew.-% an vernetzenden Strukturen, die aus Monomeren mit mindestens zwei olefinischen Doppelbindungen hervorgegangen sind, besteht, wobei X für ein Kation oder ein Gemisch von Kationen steht und X nicht zu mehr als 10 Mol-% aus Protonen bestehen darf,
II) 20 bis 95 Gew.-% eines oder mehrerer Emulgatoren und/oder einer Ölphase, sowie
III) 0 bis 30 Gew.-% Wasser.

2. Dispersionskonzentrate gemäß Anspruch 1, **dadurch gekennzeichnet, dass** das Polymer vernetzende Strukturen aufweist, die sich von Acryl- oder Methacrylsäureallylester, Dipropylenglykol-diallylether, Polyglykoldiallylether, Triethylen-glykoldivinylether, Hydrochinon-diallylether, Tetraallyloxyethan oder anderen Allyl- oder Vinylethern multifunktioneller Alkohole, Tetraethylenglykoldiacrylat, Triallylamin, Trimethylolpropandiallylether, Methylen-bis-acrylamid, Divinylbenzol oder Trimethylolpropan-tri(meth)acrylat ableiten.

3. Dispersionskonzentrat nach Anspruch 1, **dadurch gekennzeichnet, dass** es 10 bis 80 Gew.-% des Polymers enthält.

4. Dispersionskonzentrat nach Anspruch 1, **dadurch gekennzeichnet, dass** es 20 bis 60 Gew.-% des Polymers enthält.

5. Dispersionskonzentrat nach Anspruch 1, **dadurch gekennzeichnet, dass** es 30 bis 40 Gew.-% des Polymers enthält.

6. Dispersionskonzentrat nach Anspruch 1, **dadurch gekennzeichnet, dass** es 40 bis 80 Gew.-% Emulgator und/oder Ölphase enthält.

7. Dispersionskonzentrat nach Anspruch 1, **dadurch gekennzeichnet, dass** es 60 bis 70 Gew.-% Emulgator und/oder Ölphase enthält.

8. Dispersionskonzentrat nach Anspruch 1, **dadurch gekennzeichnet, dass** es 0 bis 10 Gew.-% Wasser enthält.

9. Dispersionskonzentrat nach Anspruch 1, **dadurch gekennzeichnet, dass** es 0 bis 5 Gew.-% Wasser enthält.

10. Kosmetische, pharmazeutische oder dermatologische Zubereitungen, enthaltend ein Dispersionskonzentrat nach Anspruch 1.

11. Kosmetische, pharmazeutische oder dermatologische Zubereitungen in Form von Öl-in-Wasser Emulsionen, enthaltend ein Dispersionskonzentrat nach Anspruch 1.

## Claims

1. A stable dispersion concentrate comprising:
I) 5. to 80% by weight of a polymer which, in random distribution, consists of 90 to 99.99% by weight of monomers of the formula (1)
H₂C=CHCONHC (CH₃) ₂CH2SO₃X (1)
and 0.01 to 10% by weight of crosslinking structures originating from monomers with at least two olefinic double bonds, where X is a cation or a mixture of cations, and X must consist of not more than 10 mol% of protons,
II) 20 to 95% by weight of one or more emulsifiers and/or an oil phase, and
III) 0 to 30% by weight of water.

2. The dispersion concentrate as claimed in claim 1, wherein the polymer has crosslinking structures derived from acrylic or methacrylic allyl ester, dipropylene glycol diallyl ether, polyglycol diallyl ether, triethylene glycol divinyl ether, hydroquinone diallyl ether, tetraallyloxyethane or other allyl or vinyl ethers of multifunctional alcohols, tetraethylene glycol diacrylate, triallylamine, trimethylolpropane diallyl ether, methylenebisacrylamide, divinylbenzene or trimethylolpropane tri(meth)acrylate.

3. The dispersion concentrate as claimed in claim 1, which comprises 10 to 80% by weight of the polymer.

4. The dispersion concentrate as claimed in claim 1, which comprises 20 to 60% by weight of the polymer.

5. The dispersion concentrate as claimed in claim 1, which comprises 30 to 40% by weight of the polymer.

6. The dispersion concentrate as claimed in claim 1, which comprises 40 to 80% by weight of emulsifier and/or oil phase.

7. The dispersion concentrate as claimed in claim 1, which comprises 60 to 70% by weight of emulsifier and/or oil phase.

8. The dispersion concentrate as claimed in claim 1, which comprises 0 to 10% by weight of water.

9. The dispersion concentrate as claimed in claim 1, which comprises 0 to 5% by weight of water.

10. A cosmetic, pharmaceutical or dermatological preparation comprising a dispersion concentrate as claimed in claim 1.

11. A cosmetic, pharmaceutical or dermatological preparation in the form of an oil-in-water emulsion comprising a dispersion concentrate as claimed in claim 1.

## Revendications

1. Concentrats stables de dispersion, contenant :
I) 5 à 80% en poids d'un polymère qui est constitué, en répartition statistique, par 90 à 99,99% de monomères de formule générale (1)
H₂C=CHCONHC (CH₃) 2CH₂SO₃X (1)
et par 0,01 à 10% en poids de structures réticulantes qui sont obtenues à partir de monomères présentant au moins deux doubles liaisons oléfiniques, où X représente un cation ou un mélange de cations et X ne peut pas être constitué à raison de plus de 10% en mole de protons,
II) 20 à 95% en poids d'un ou de plusieurs émulsifiants et/ou d'une phase huileuse, ainsi que
III) 0 à 30% en poids d'eau.

2. Concentrats de dispersion selon la revendication 1, **caractérisés en ce que** le polymère présente des structures réticulantes qui sont dérivées d'esters allyliques de l'acide acrylique ou méthacrylique, de dipropylèneglycoldiallyléther, de polyglycoldiallyléther, de triéthylèneglycoldivinyléther, d'hydroquinonediallyléther, de tétraallyloxyéthane ou d'autres allyléthers ou vinyléthers d'alcools polyfonctionnels, de diacrylate de tétraéthylèneglycol, de triallylamine, de triméthylolpropanediallyléther, de méthylènebisacrylamide, de divinylbenzène ou de tri(méth)acrylate de triméthylolpropane.

3. Concentrat de dispersion selon la revendication 1, **caractérisé en ce qu'**il contient 10 à 80% en poids du polymère.

4. Concentrat de dispersion selon la revendication 1, **caractérisé en ce qu'**il contient 20 à 60% en poids du polymère.

5. Concentrat de dispersion selon la revendication 1, **caractérisé en ce qu'**il contient 30 à 40% en poids du polymère.

6. Concentrat de dispersion selon la revendication 1, **caractérisé en ce qu'**il contient 40 à 80% en poids d'émulsifiant et/ou de phase huileuse.

7. Concentrat de dispersion selon la revendication 1, **caractérisé en ce qu'**il contient 60 à 70% en poids d'émulsifiant et/ou de phase huileuse.

8. Concentrat de dispersion selon la revendication 1, **caractérisé en ce qu'**il contient 0 à 10% en poids d'eau.

9. Concentrat de dispersion selon la revendication 1, **caractérisé en ce qu'**il contient 0 à 5% en poids d'eau.

10. Préparations cosmétiques, pharmaceutiques ou dermatologiques contenant un concentrat de dispersion selon la revendication 1.

11. Préparations cosmétiques, pharmaceutiques ou dermatologiques sous forme d'émulsions huile-dans-eau, contenant un concentrat de dispersion selon la revendication 1.
